# EUROPEAN PATENT SPECIFICATION

(11) **EP 2 088 125 B1**
(45) Date of publication and mention of the grant of the patent: **31.12.2014**
(21) Application number: 07747191.0
(22) Date of filing: 03.04.2007
(51) Int. Cl.: C01F 5/20, C01F 5/22

(54) **METHOD FOR PRODUCING STABLE, MONODISPERSED, NANOMETRIC MAGNESIUM HYDROXIDE AND RESULTING PRODUCT**
VERFAHREN ZUR HERSTELLUNG VON STABILEM, MONODISPERSEM, NANOMETRISCHEM MAGNESIUMHYDROXID UND RESULTIERENDES PRODUKT
PROCÉDÉ POUR LA FABRICATION D'HYDROXYDE DE MAGNÉSIUM NANOMÉTRIQUE, MONODISPERSÉ ET STABLE ET PRODUIT AINSI OBTENU

(30) Priority: 03.10.2006 MX NL06000070
(43) Date of publication of application: 12.08.2009
(73) Proprietor: Servicios Administrativos Peñoles SA de CV, C.P. 27268 Torreón Coahuila (MX)
(72) Inventor: MARTÍNEZ MARTÍNEZ, Jesús Manuel, C.P. 67193 Guadalupe, Nuevo León (MX); BENAVIDES PÉREZ, Ricardo, C.P. 64960 Monterrey, Nuevo León (MX); BOCANEGRA ROJAS, José Gertrudis, C.P. 64890 Monterrey, Nuevo León (MX)
(74) Representative: Vogel, Andreas
(86) International application number: PCT/MX2007/000045
(87) International publication number: WO 2008/041833

(56) References cited:
- EP-A2- 0 114 755
- WO-A1-92/12097
- US-A- 5 461 101
- US-A- 5 906 804
- US-A- 5 989 517
- DING Y ET AL: "NANOSCALE MAGNESIUM HYDROXIDE AND MAGNESIUM OXIDE POWDERS: CONTROL OVER SIZE, SHAPE, AND STRUCTURE VIA HYDROTHERMAL SYNTHESIS", CHEMISTRY OF MATERIALS, AMERICAN CHEMICAL SOCIETY, WASHINGTON, US LNKD- DOI:10.1021/CM000607E, vol. 13, no. 2, 1 February 2001 (2001-02-01), pages 435-440, XP001005173, ISSN: 0897-4756
- JIANPING ET AL.: 'Controlled growth of three morphological structures of magnesium hydroxide nanoparticles by wet precipitation method' JOURNAL OF CRYSTAL GROWTH vol. 267, 2004, pages 676 - 684, XP004519684
- XIAOTAN L.V. ET AL.: 'In situ synthesis of nanolamellas of hydrophobic magnesium hydroxide' COLLOIDS AND SURFACES A: PHYSICOCHEM. ENG. ASPECTS vol. 296, 22 September 2006, pages 97 - 103, XP005888528

## Description

### Field of the Invention.

The present invention is related to the process of the preparation of nanoparticles and specifically, to the process of preparing the nanoparticles of monodisperse and stable magnesium hydroxide that is dispersible in different environments.

### Precedents to the Invention

Magnesium Hydroxide is used for many different purposes, such as: neutralizer of waste water acids in industrial processes; pH controller; stabilizer of stomach acids; flame resistance and suppressor of smoke for the Polymer industry in different applications.

To avoid confusion in the use of certain terms, in the present text, the term "nanoparticle" is generally used to refer to particles that have a diameter equal to or less than 100nm, and the term "monodispersion" is used to identify particles with a uniform size in a phase of dispersion.

It is known that the properties and functions of nanometric materials, in this case magnesium hydroxide should be studied for the benefit of society.

The processes of the fabrication of magnesium hydroxide are well known and industrially exploited, as an intermediate product, primarily in the production of flame resistant materials. The oxides are hydrated producing suspensions of magnesium hydroxide whose particle sizes can fluctuate from 0.05 to 10.0 microns. It is obvious that this material cannot be considered nanometric or stable. In this application, in particular, it is desirable to fabricate particles in closed range distribution and large sizes, so that it eases the elimination of impurities (bleach, boron, calcium, iron) in the final product.

Differences have been found in the way to characterize the nanometric product. The size of the particles or of the crystals can be measured. Measuring the crystals can be done by taking as the base the width and the profile of the points of the diffractogram and evaluating these parameters with the Rietveld method; or with the help of a (transmission or scanning) electron microscope and measuring the crystals that are within the observation field. Measuring the size of the particle can be done with the dispersion of light, the dispersion of phototons, the attenuation of acoustic waves and measuring the velocity of sedimentation. Another technique for the characterization of the particles is the measurement of the surface area and taking into account the morphology of the crystals, to make an estimate of the size that it would have to obtain such surface area.

The measurement of the size of a particle, different from the measurement of the size of the crystal, is that the first reflects the distribution of the real size that a material has in a given state.

In our case, we used the dispersion of a laser ray (dispersion of light) in the product obtained by the method of the present invention.

In patent number CN1332116, for the preparation of the nanoparticles of magnesium hydroxide, the process should take place at a temperature of between 100 and 200°C, with a reaction time being between 2 and 12 hours.

In patent number CN341694, the reaction takes place in the rotary bed. The temperature of maturation needs to be between 80 and 100 °C.

In patent number CN1359853, it doesn't give details as to the way that the reaction is to take place, the surfactant additives used are potassium salt and OP -10; the product obtained requires a trituration to obtain the dispersion, furthermore, the reported size is that of a crystal measured by the diffraction of x rays (DRX by its acronym in Spanish).

In patent number CN1361062, the reactor used is of a previously mixed liquid membrane.

In patent number CN1389521, the reaction takes place in only one phase in a reactor with high velocity agitation, then follows the process of 5 hours of ultrasound, then the gelatin formed dries and proceeds to a stage of grinding.

The document published in Journal of Crystal Growth 267 (2004) 676-684 by Lv Jianping discloses a procedure for obtaining magnesium hydroxide nanoparticles as a powder. The procedure comprises the reaction of magnesium chloride hexahydrate with aqueous ammonia and/or sodium hydroxide wherein one of the reactants was injected into the solution at different speeds.

### Objective of the Invention

Upon the light of the problems found in the previous art, it is the purpose of the present invention, to provide a new process for the preparation of nanoparticles of magnesium hydroxide as defined by claims 1-16.

An additional objective of the invention is to prove a process for the production in high concentrations of the nanoparticles of magnesium hydroxide.

Another objective of the present invention is that the process permits the production of monodisperse particles of magnesium hydroxide.

One more objective of the invention is that the nanoparticles of the magnesium hydroxide that are obtained through the process will have diameters between 90 and 110 nm.

Another objective of the invention is that the nanoparticles produced through the process offer a superior stability to 12 months, without agitation during the period of storage.

One more objective of the invention is to provide a process for the production of nanoparticles of magnesium hydroxide in a pattern of batches.

Another objective of the invention is to provide a process for the production of nanoparticles of magnesium hydroxide in a continuous pattern.

One more objective of the invention is that the process of the production of the hydroxide in the process permits the control of the size of the particle.

Another objective of the invention is that the product will have properties to disperse in different substances.

### A Brief Description of the Figures

For a better understanding of the material of the invention, the description is accompanied by a series of figures that are to be illustrations and not limiting to the reach of the same. They are described in the following.
Figure one is a diagram of the blocks of the process for obtaining the nanoparticles of magnesium hydroxide from the invention.
Figure two is a graph of the size distribution of the particles of magnesium hydroxide obtained from the invention's process.
Figure three is a graph of the size distribution of the particle of magnesium hydroxide obtained from the invention's process.
Figure four is a micrograph of the nanometric and monodisperse magnesium hydroxide with particle sizes between 20 and 50 nm, prepared for the procedure described of the present invention.
Figure Five is a diffractogram of magnesium hydroxide obtained through the present invention.

### A brief description of the Invention

The present invention is related with the method of preparation of the nanometric particles of magnesium hydroxide that have a diameter in the range of 20 to 160 nm with an average diameter of 100nm. The particles have the characteristics of monodisperse particles and a stability of greater than 12 months and are found in a wide range of concentrations.

The process of the present invention takes place starting from the controlled quantities of magnesium salts, such as chlorides, sulfates, acetates, oxides, magnesium carbonate, and others, as well as combinations of the same, that following is to maintain a pH control by the controlled addition of alkalis, such as sodium carbonate, potassium carbonate, sodium hydroxide, potassium hydroxide, ammonium, and ammonium solutions, with that which causes the precipitation of magnesium hydroxide.

The process takes place in 3 stages: a reaction realized in 2 steps, a stage of development and a stage of purification. The first step of the first stage of the reaction is characterized by a micro mixed reaction zone, where the size of the particle is controlled and with the integration of additives assures the monodispersion of the particles; the second step of the reaction is the stabilization of the suspension. In the second stage, the development of the particles is established trough a chemical- mechanical process. The last stage is designed for the purification and the concentration of the material, as well as the preparation of the same into the desired state, giving it stable and disperse properties.

The particles are able to be re- dispersed into different forms, such as water, alcohols, aldehyde resins, phenolic resins, polyurethane, vinyl, acrylics, and in a wide variety of organic materials and polymers such as high and low density polypropylene, Nylon, ABS and / or any combination of the same.

### Detailed Description of the Invention

Following are the details of the procedure of the invention, the same that is illustrated in Figure one, in which the operations and the currents are described as indicated by the numbers in parenthesis.

### Stage 1. Reaction (600)

### Preparation of the aqueous magnesium solution (100)

The aqueous magnesium solution can contain from 0.01% to 10% weight of the dissolved magnesium, that is obtained from a source of magnesium (10) selected from the group made up of chlorides, sulfates, acetates, oxides, magnesium carbonate, and others salts, as well as mixes of the same. A surfactant (30) that is selected from the group that includes ethoxylates (like nonylphenol), alkyl phenol ethoxylate, and sodium laureth sulfate, in a quantity from 0.01% to 10% and preferable 3% in the base of the weight of the precipitated magnesium hydroxide, is added. Also in this aqueous solution, an organic acid (20) selected from the group that includes succinic, ascorbic, oxalic, adipic, tartaric, citric, diglycolic, salcylic and glutaric acids, as well as other types of acids is desolved, in a quantity of from 0.01% to 10% and preferable 2% in base weight of the magnesium hydroxides that has precipitated.

### Preparation of the aqueous alkali solution. (200)

A aqueous alkali solution in a concentration of up to 50% of the weight of an alkali (40) is selected from the group that includes sodium and potassium carbonates, ammonia, sodium, potassium, calcium hydroxides, ammonium solutions and other alkalis that allow the pH in a reaction to increase to values higher than 8.5. To this aqueous solution is added a dispersant (50) with a acrylate polymer base, such as GBC-110; Disperbyk® 190, 185 y 156 (Byk Chemie); Busperse^{®} 39 (Beckman;)among others, from 0.01% to 10 % of the base weight of the magnesium hydroxide precipitate.

### Preparation of the aqueous and diluted solution of the reaction.

The aqueous diluted solution contains water (60) and a dispersant (70) with an acrylate polymer base with up until 10% of the base the weight of the magnesium hydroxide precipitate.

### Reaction of the creation of nanometric magnesium hydroxide (600).

The reaction (600) can take place in batches as well as continuously, depending on the scale of the production that is required to obtain, but in all cases it is defined in two steps.

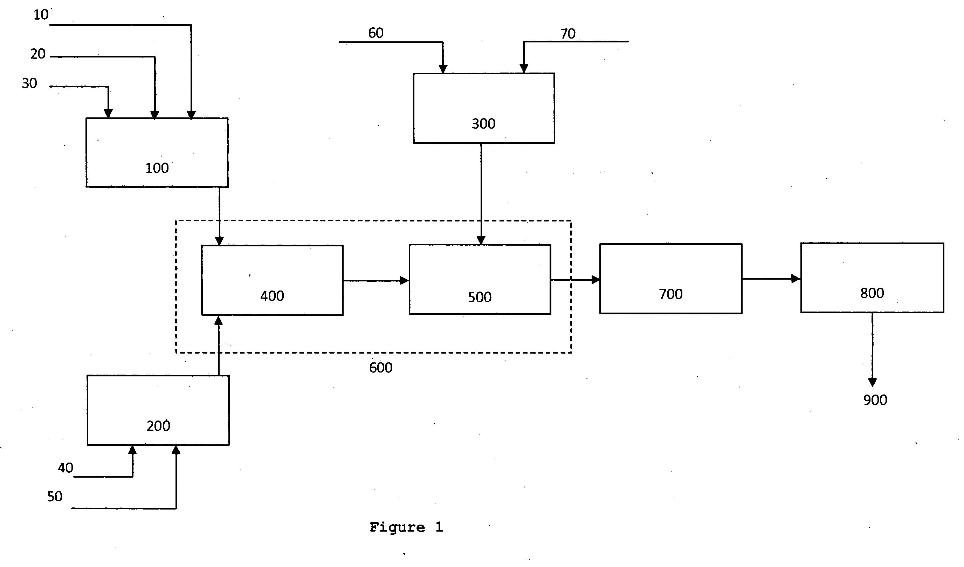

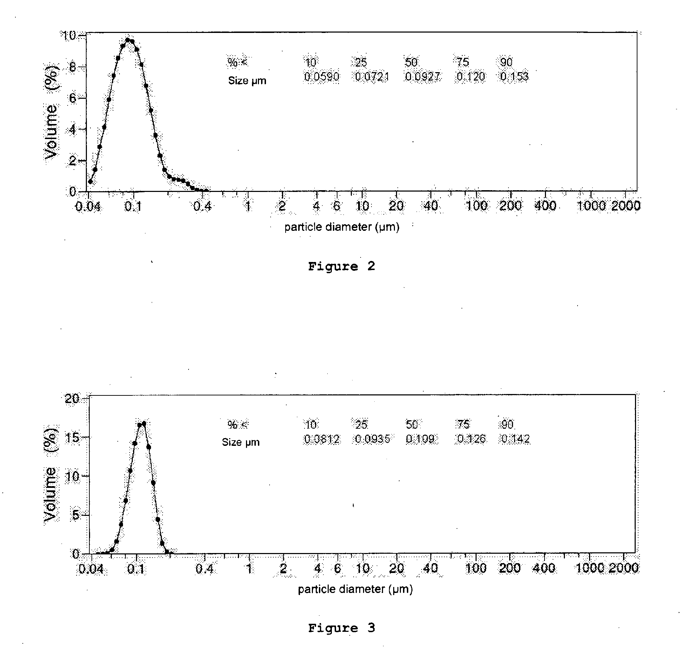

The figures 2, 3, 4 and 5 are the results of the analysis of the productions done in a (semi-industrial) pilot plant with a capacity of 1.0 tons per day of nanometric magnesium hydroxide.

In the micro mixing zone (400) the solutions of magnesium (100) and alkali (200) are combined. The proportion between the magnesium (100) and the alkali (200) can be in figured according to the rules of stoichiometry, or with an excess of from 20 to 50 % in excess of either one of the reactants, preferable in excess of the alkali.

It is important to state that in the absence of additives and in stoichiometric quantities, the reaction produces magnesium hydroxide with crystals and large particles and a low surface area; the excess of any of the reactants produces Mg(OH)2 in the form of small crystals, with large particles, and large surface areas of approximately 60 m2/g or more. With the use of additives that conform with the invention, and especially with an excess of 30% of alkali, small crystals and small particles are produced, and a surface area of approximately 60 m2/g or more is obtained.

The time of residence in the micro mixer can be up to 3 minutes, and preferably less than a minute. The conditions of the micro mixing zone are a turbulent flow, with Reynolds number NRe of 3,000 or greater. The temperatures of operation in the micro mixing zone are found to be between 5° and 45 ° C.

In the stabilization zone (500) of the suspension, that can be provided by an internal accessory of the reactor as well as by external equipment, is added the aqueous diluted solution (300) assuring that the conditions of the mixture are homogenous, such that a pumping range of at least 2 and a maximum of 6 prevails, that is the massive velocity of fluid should be at least 10 ft/ min. till 40 ft/ min.; the time of residence in the order for 5 to 30 minutes, and preferable between 5 and less than 10 minutes, although the agitation can be maintained for up to 3 hours.

It is important that during the reaction (600) that a pH of 8.5 or higher is maintained.

### Stage 2. Maturation of the nanometric magnesium Hydroxide (700)

The process of maturation implies a mechanical and chemical conditioning, with the application of ultrasound through any conventionally available means, using a frequency in the range of 20 to 45 kHz in a way that the action combined with mechanical work and the dispersants and organic acids, allows the deactivation of the active points, although they are still present in the particles and crystals of the formed hydroxide. The maturation period has a maturation time less than or equal to 3 hours, and preferable between 15 and 60 minutes. The temperature at this stage should be controlled at between 60 and 80° C.

### Stage 3. Washing the nanometric magnesium Hydroxide (800)

The stage of washing (800) serves to purify the magnesium hydroxide produced in the stages of reaction (600) and maturation (700), and is shaped by as many cycles as is required until reaching the purity established, concentrating the product until a paste is obtained that has contents of up to 35% solid, and in special conditions it can reach 60%, being the redispersible magnesium hydroxide with a particle size of between 90 and 110 nm.

The product obtained in this way is magnesium hydroxide with the particle size distribution being as is shown in Figures 2 and 3, where Figure 2 is a graph of the distribution of the particle sizes of magnesium hydroxide obtained by the process of the invention, in a (semi- industrial) pilot plant with a capacity of 1.0 tons per day of nanometric magnesium hydroxide, where the following distribution of particle sizes are shown: D10, 59.0 nm; D50, 92.7 nm; D90, 153 nm, measured by the diffraction of laser rays in the equipment marked with brand name "Coulter LS230", showing a crystal size of 23 nm, measuring the width as the base and the profile of the points of the (diffractogram), obtained from the diffractometer of X rays brand named "Bruker D8 Advance" and evaluating these parameters with the Rietveld method.

The figure 3 graphically shows magnesium hydroxide particle size distribution obtained by this invention process, in a (semi industrial) pilot plant with capacity of 1.0 Tons per day of nanometric magnesium hydroxide, where the following particle size distribution is shown: D₁₀, 81.2 nm; D₅₀, 109 nm; D₉₀, 142 nm. All of them were measured by laser ray diffraction, using a COULTER LS230 device, with a crystal size of 24nm measured by using as the base the width and the profile of diffractogram peaks, which are obtained using BRUKER D8 Advance x ray diffractometer, and evaluating these parameters using Rietveld method.

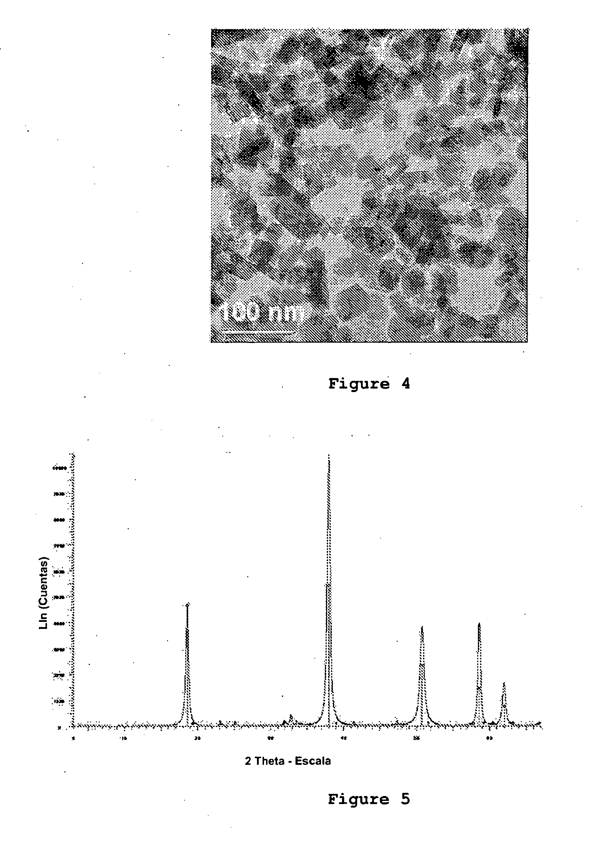

The figure 4 is a micrography of nanometric monodispersed magnesium hydroxide with sizes that range from 20 to 50 nm, measured using a Transmission Electron Microscope, the sample was prepared using the procedure described in the present invention in a (semi - industrial) pilot plant with capacity of 1.0 Tons of nanometric magnesium hydroxide per day.

The figure 5 is a diffractogram of magnesium hydroxide obtained by using a BRUKER D8 Advance x ray diffractometer, through the procedure described in the present invention. The Rietveld method calculates the crystal size taking as base the width and profile of diffractogram peaks,.

The previously mentioned description of the process of this invention, reflects the necessary stages to assure that the obtained product reaches the characteristics of homogeneity, stability, monodispersity and other characteristics of magnesium hydroxide nanoparticles that have already been described, and furthermore, includes preferred modes of operating conditions, and other parameters; however, said description and the attached figures have to be considered as a representation of the process and product, more so than boundaries within themselves. For a person knowledgeable in this subject, it will be evident that new variations can be introduced when performing the invention with different equipment and raw materials normally available, but such variations cannot be considered out of scope of this invention, which is determined by following claims.

## Claims

1. Process for the production of nanometric, monodisperse and stable Mg(OH)₂ paste, which is constituted by the following stages:
a. mixing in a micromixing zone an aqueous magnesium salt solution and an aqueous alkaline solution, wherein
i) the aqueous magnesium salt solution contains from 0.01% to 10% weight of dissolved magnesium , a surfactant and an organic acid,
ii) the aqueous alkaline solution has a concentration less or equal of 50% of alkali and a dispersant;
b. stabilizing the product of reaction in an stabilization zone in the presence of an aqueous dilutant wherein the dilutant aqueous solution contains water and a dispersant;
c. maturing the stabilized product, wherein the product is subjected to ultrasound application with a frequency in the range of 20 to 45 kHz at a temperature of between 60°C and 80°C, wherein during the maturing, the active points of the crystals obtained in the stages a. and b. are deactivated;
d. washing the matured product, wherein in the washing stage the purity and the concentration of the magnesium hydroxide is controlled.

2. The process according to the first claim **characterized by** the fact that the magnesium solution that is prepared from a magnesium salt that is selected from the group that includes chlorides, sulfates, acetates, oxides, carbonates, or mixtures of the same.

3. The process according to the first claim **characterized by** the fact that the surfactant is selected from a group that includes nonylphenol, alkyl phenol ethoxylate, and lauryl sodium sulfate and especially that the surfactant of the aqueous solution of magnesium is found in a proportion that ranges from 0.01% to 10% and is preferable 3%, based on the weight of the precipitated magnesium hydroxide

4. The process according to the first claim **characterized by** the fact that the organic acid used in the magnesium solution is selected from the group that includes: succinic, ascorbic, oxalic, adipic, tartaric, citric, diglycolic, salcylic and glutaric acid.

5. The process according to the first claim **characterized by** the fact that the alkali used to produce the alkaline solution is selected from the group that includes: sodium carbonate, potassium carbonate, sodium hydroxide, potassium hydroxide, ammonium and ammonia solutions.

6. The process according to the first claim **characterized by** the fact that during the stages a. and b. a pH of 8.5 or higher is maintained.

7. The process **characterized by** the fact the dispersant to produce the alkaline solution is a dispersant with an acrylate polymer base and especially that the dispersant in the aqueous alkaline solution is found in a proportion that ranges from 0.01% to 10% based on the weight of the precipitated magnesium hydroxide.

8. The process according to the first claim **characterized by** the fact that the diluted solution contains water and a dispersant with a base of a polyacrylate acid or salts there of derived, up to a 10% of the weight of the precipitated magnesium hydroxide.

9. The process according to the first claim **characterized by** the fact that magnesium salt and alkaline solutions are blended by vigorous agitation, in a turbulent pattern with the NRe greater than or equal to 3,000, guarantying the micromixing.

10. The process according to claim 1 **characterized by** the fact that the proportion of the mixture between the magnesium and the alkali is at a stoichiometric level or that the proportion of the mixture between the magnesium and the alkali is not at a stoichiometric level, with from 20% to 50% in excess of the other, either of the respective parts of the reaction can have the excess in respect to the stoichiometric quantity, especially that the proportion of the mixture between the magnesium and the alkali is with excess of the alkali in respect to the stoichiometric level, preferably in 30% with respect to the stoichiometric quantity.

11. The process according to the first claim **characterized by** the fact that the time that the mixture remains in the micromixing zone is up to 3 minutes and, preferably less than one minute.

12. The process according to the first claim **characterized by** the fact that the product from the micromixing zone is taking to the stabilization zone where a dilutant is added to it and in the stabilization zone homogenous mixing conditions prevail, especially that the time in the stabilizing zone ranges from 5 to 30 minutes, and preferably between 5 and 10 minutes.

13. The process according to the first claim **characterized by** the fact that the already stabilized product of the reaction is submitted to a stage of maturation with mechanical and chemical conditioning especially that the time in the maturation stage ranges from between 15 and 60 minutes.

14. The process according to the first claim **characterized by** the fact that in the washing stage magnesium hydroxide particles are purified and the paste obtained has a concentration of less than or equal to 60% of the weight of the solid.

15. The process according to the first claim **characterized by** the fact that the washing process can be repeated in as many cycles as needed to achieve the purity that is needed.

16. The process according to the first claim **characterized by** the fact that the process is realized in batches or it is performed in a continuous process.

17. A magnesium hydroxide paste obtained according to the process described in the first claim, **characterized by** the fact that the mentioned paste is stable for periods of greater than 12 month without the need of mechanical treatment.

## Patentansprüche

1. Prozess zur Herstellung von nanometrischer, monodisperser und stabiler Mg(OH)2-Paste, der aus den folgenden Stufen besteht:
a. Mischen einer wässrigen Magnesiumsalzlösung und einer wässrigen alkalischen Lösung in einer Mikromischzone, wobei
i) die wässrige Magnesiumsalzlösung 0,01 % bis 10 Gew-% aufgelöstes Magnesium, ein Tensid und eine organische Säure enthält;
ii) die wässrige alkalische Lösung eine Konzentration von kleiner oder gleich 50 % Alkali und ein Dispergiermittel hat;
b. Stabilisieren des Reaktionsproduktes in einer Stabilisierungszone in Gegenwart eines wässrigen Verdünnungsmittels, wobei die wässrige Verdünnerlösung Wasser und ein Dispergiermittel enthält;
c. Reifen des stabilisierten Produktes, wobei das Produkt einer Ultraschallanwendung mit einer Frequenz im Bereich von 20 bis 45 kHz bei einer Temperatur zwischen 60 °C und 80 °C ausgesetzt wird, wobei während des Reifens die aktiven Punkte der Kristalle, die in Stufe a. und b. deaktiviert sind;
d. Waschen des gereiften Produktes, wobei im Waschstadium die Reinheit und die Konzentration des Magnesiumhydroxids kontrolliert werden.

2. Prozess nach dem ersten Anspruch, **gekennzeichnet durch** die Tatsache, dass die Magnesiumlösung aus einem Magnesiumsalz hergestellt wird, welches aus der Gruppe bestehend aus Chloriden, Sulfaten, Acetaten, Oxiden, Karbonaten oder Mischungen derselben ausgewählt wird.

3. Prozess nach dem ersten Anspruch, **gekennzeichnet durch** die Tatsache, dass das Tensid aus der Gruppe bestehend aus Nonylphenol, Alkylphenolethoxylat und Laurylnatriumsulfat ausgewählt wird, und besonders dass das Tensid der wässrigen Lösung von Magnesium in einem Anteil gefunden wird, der von 0,01 % bis 10 % liegt und vorzugsweise 3 % beträgt, bezogen auf das Gewicht des abgeschiedenen Magnesiumhydroxids.

4. Prozess nach dem ersten Anspruch, **gekennzeichnet durch** die Tatsache, dass die organische Säure, die in der Magnesiumlösung verwendet wird, aus der Gruppe ausgewählt wird, die aus Folgendem besteht: Bernstein-, Ascorbin-, Oxal-, Adipin-, Wein-, Zitronen-, Diglykol-, Salicyl- und Glutarsäure.

5. Prozess nach dem ersten Anspruch, **gekennzeichnet durch** die Tatsache, dass das Alkali, welches zum Herstellen der alkalischen Lösung verwendet wird, aus der Gruppe ausgewählt wird, die aus Folgendem besteht: Natriumkarbonat-, Kaliumkarbonat-, Natriumhydroxid-, Kaliumhydroxid-, Ammonium- und Ammoniaklösung.

6. Prozess nach dem ersten Anspruch, **gekennzeichnet durch** die Tatsache, dass während der Stufen a. und b. ein pH-Wert von 8,5 oder höher aufrechterhalten wird.

7. Prozess, **gekennzeichnet durch** die Tatsache, dass ein Dispergiermittel zum Herstellen der alkalischen Lösung ein Dispergiermittel mit einer Acrylatpolymerbasis ist und besonders dass das Dispergiermittel in der wässrigen alkalischen Lösung mit einem Anteil im Bereich von 0,01 % bis 10 % gefunden wird, bezogen auf das Gewicht des abgeschiedenen Magnesiumhydroxids.

8. Prozess nach dem ersten Anspruch, **gekennzeichnet durch** die Tatsache, dass die verdünnte Lösung Wasser und ein Dispergiermittel mit einer Basis einer Polyacrylatsäure oder davon abgeleiteten Salzen enthält, bis zu 10 Gew-% des abgeschiedenen Magnesiumhydroxids.

9. Prozess nach dem ersten Anspruch, **gekennzeichnet durch** die Tatsache, dass Magnesiumsalz und alkalische Lösungen **durch** starkes Rühren gemischt werden, in einer turbulenten Form mit NRe größer oder gleich 3.000, was das Mikromischen garantiert.

10. Prozess nach Anspruch 1, **gekennzeichnet durch** die Tatsache, dass die Proportion der Mischung zwischen dem Magnesium und dem Alkali auf einem stöchiometrischen Wert liegt oder dass die Proportion der Mischung zwischen dem Magnesium und dem Alkali nicht auf einem stöchiometrischen Wert liegt, mit 20 % bis 50 % über dem anderen, jedes der jeweiligen Teile der Reaktion einen Überschuss gegenüber der stöchiometrischen Menge haben kann, besonders dass die Proportion der Mischung zwischen dem Magnesium und dem Alkali einen Überschuss des Alkali gegenüber dem stöchiometrischen Wert hat, vorzugsweise von 30 % gegenüber der stöchiometrischen Menge.

11. Prozess nach dem ersten Anspruch, **gekennzeichnet durch** die Tatsache, dass die Zeit, während der die Mischung in der Mikromischzone bleibt, bis zu 3 Minuten und vorzugsweise weniger als eine Minute beträgt.

12. Prozess nach dem ersten Anspruch, **gekennzeichnet durch** die Tatsache, dass das Produkt aus der Mikromischzone sich in die Stabilisierungszone begibt, wo ihm ein Verdünnungsmittel zugesetzt wird, und dass in der Stabilisierungszone homogene Mischungsbedingungen vorherrschen, besonders dass die Zeit in der Stabilisierungszone von 5 bis 30 Minuten und vorzugsweise von 5 bis 10 Minuten reicht.

13. Prozess nach dem ersten Anspruch, **gekennzeichnet durch** die Tatsache, dass das bereits stabilisierte Reaktionsprodukt einer Stufe der Reifung mit mechanischer und chemischer Konditionierung unterzogen wird, besonders dass die Zeit in der Reifungsstufe von 15 bis 60 Minuten reicht.

14. Prozess nach dem ersten Anspruch, **gekennzeichnet durch** die Tatsache, dass in der Waschstufe Magnesiumhydroxidteilchen gereinigt werden und die erhaltene Paste eine Konzentration von kleiner oder gleich 60 % des Feststoffgewichts hat.

15. Prozess nach dem ersten Anspruch, **gekennzeichnet durch** die Tatsache, dass der Waschprozess so oft wie nötig wiederholt werden kann, um die benötigte Reinheit zu erreichen.

16. Prozess nach dem ersten Anspruch, **gekennzeichnet durch** die Tatsache, dass der Prozess in Chargen realisiert wird oder dass er in einem kontinuierlichen Prozess ausgeführt wird.

17. Magnesiumhydroxidpaste, die entsprechend dem Prozess erhalten wird, welcher im ersten Anspruch beschrieben wird, **gekennzeichnet durch** die Tatsache, dass die erwähnte Paste stabil ist über Zeiten von mehr als 12 Monaten, ohne dass eine mechanische Behandlung notwendig ist.

## Revendications

1. Procédé de fabrication d'une pâte de Mg(OH)₂ nanométrique, monodispersée et stable, lequel est constitué des étapes suivantes :
a. un mélange dans une zone de micro-mélange d'une solution de sel de magnésium aqueuse et d'une solution alcaline aqueuse, où
i) la solution de sel de magnésium aqueuse contient de 0,01 % à 10 % en poids de magnésium dissous, un tensioactif et un acide organique ;
ii) la solution alcaline aqueuse présente une concentration inférieure ou égale à 50 % d'une base et un dispersant ;
b. une stabilisation du produit de réaction dans une zone de stabilisation en la présence d'un diluant aqueux où la solution aqueuse de diluant contient de l'eau et un dispersant ;
c. une maturation du produit stabilisé, où le produit est soumis à une application d'ultrasons selon une fréquence dans la plage allant de 20 à 45 kHz à une température comprise entre 60 °C et 80 °C, où au cours de la maturation, les centres actifs des cristaux obtenus lors des étapes a. et b. sont désactivés ;
d. un lavage du produit ayant été soumis à maturation, où lors de l'étape de lavage, la pureté et la concentration de l'hydroxyde de magnésium sont contrôlées.

2. Procédé selon la revendication 1, **caractérisé par le fait que** la solution de magnésium qui est préparée à partir d'un sel de magnésium qui est sélectionné parmi le groupe qui inclut des chlorures, des sulfates, des acétates, des oxydes, des carbonates, ou des mélanges de ceux-ci.

3. Procédé selon la revendication 1, **caractérisé par le fait que** le tensioactif est sélectionné parmi le groupe qui inclut le nonylphénol, un éthoxylate d'alkylphénol, et le laurylsulfate de sodium et en particulier **par le fait que** le tensioactif de la solution aqueuse de magnésium est présent selon une proportion qui va de 0,01 % à 10 % et est de préférence de 3 %, par rapport à la masse de l'hydroxyde de magnésium précipité.

4. Procédé selon la revendication 1, **caractérisé par le fait que** l'acide organique utilisé dans la solution de magnésium est sélectionné parmi le groupe qui inclut : l'acide succinique, l'acide ascorbique, l'acide oxalique, l'acide adipique, l'acide tartrique, l'acide citrique, l'acide diglycolique, l'acide salicylique et l'acide glutarique.

5. Procédé selon la revendication 1, **caractérisé par le fait que** la base utilisée pour préparer la solution alcaline est sélectionnée parmi le groupe qui inclut : le carbonate de sodium, le carbonate de potassium, l'hydroxyde de sodium, l'hydroxyde de potassium, une solution d'ammonium et une solution d'ammoniaque.

6. Procédé selon la revendication 1, **caractérisé par le fait que** lors des étapes a. et b., un pH de 8,5 ou plus est maintenu.

7. Procédé, **caractérisé par le fait que** le dispersant utilisé pour préparer la solution alcaline est un dispersant avec une base de polymère d'acrylate et en particulier **par le fait que** le dispersant dans la solution alcaline aqueuse est présent selon une proportion qui va de 0,01 % à 10 %, par rapport à la masse de l'hydroxyde de magnésium précipité.

8. Procédé selon la revendication 1, **caractérisé par le fait que** la solution diluée contient de l'eau et un dispersant avec une base d'un acide de polyacrylate ou de ses sels dérivés, jusqu'à 10 % de la masse de l'hydroxyde de magnésium précipité.

9. Procédé selon la revendication 1, **caractérisé par le fait que** la solution de sel de magnésium et la solution alcaline sont mélangées par agitation vigoureuse, selon un modèle turbulent avec le nombre de Reynolds NRe supérieur ou égal à 3 000, garantissant le micro-mélange.

10. Procédé selon la revendication 1, **caractérisé par le fait que** la proportion du mélange entre le magnésium et la base est à un niveau stoechiométrique ou **par le fait que** la proportion du mélange entre le magnésium et la base n'est pas à un niveau stoechiométrique, l'un étant en excès de 20 % à 50 % par rapport à l'autre, l'une ou l'autre des parties respectives de la réaction pouvant être en excès par rapport à la quantité stoechiométrique, en particulier **par le fait que** la proportion du mélange entre le magnésium et la base présente un excès de la base par rapport au niveau stoechiométrique, de préférence de 30 % par rapport à la quantité stoechiométrique.

11. Procédé selon la revendication 1, **caractérisé par le fait que** le temps durant lequel le mélange reste dans la zone de micro-mélange est d'au maximum 3 minutes et, de préférence est inférieur à une minute.

12. Procédé selon la revendication 1, **caractérisé par le fait que** le produit sortant de la zone de micro-mélange est acheminé jusqu'à la zone de stabilisation, dans laquelle un diluant lui est ajouté et, dans la zone de stabilisation, des conditions de mélange homogène prévalent, en particulier **par le fait que** le temps passé dans la zone de stabilisation va de 5 à 30 minutes, et est de préférence compris entre 5 et 10 minutes.

13. Procédé selon la revendication 1, **caractérisé par le fait que** le produit de réaction déjà stabilisé est soumis à une étape de maturation avec un conditionnement mécanique et chimique, en particulier **par le fait que** le temps passé pour l'étape de maturation est compris entre 15 et 60 minutes.

14. Procédé selon la revendication 1, **caractérisé par le fait que**, lors du lavage, les particules d'hydroxyde de magnésium sont purifiées et la pâte obtenue présente une concentration inférieure ou égale à 60 % de la masse du solide.

15. Procédé selon la revendication 1, **caractérisé par le fait que** le procédé de lavage peut être répété autant de fois que nécessaire pour obtenir la pureté qui est nécessaire.

16. Procédé selon la revendication 1, **caractérisé par le fait que** le procédé est réalisé par lots ou bien il est mis en oeuvre de marnière continue.

17. Pâte d'hydroxyde de magnésium obtenue conformément au procédé selon la revendication 1, **caractérisée par le fait que** la pâte mentionnée est stable sur des périodes de plus de 12 mois sans nécessiter de traitement mécanique.
